Europäisches Patentamt

(19) European Patent Office

Office européen des brevets

(11) Veröffentlichungsnummer: **0 137 362**
**B1**

(12) **EUROPÄISCHE PATENTSCHRIFT**

(45) Veröffentlichungstag der Patentschrift: **18.07.90**

(21) Anmeldenummer: **84111062.0**

(22) Anmeldetag: **17.09.84**

(51) Int. Cl.⁵: **F 27 B 13/12, F 23 C 5/00, F 27 B 9/38, F 27 B 3/20, F 27 B 9/36, F 27 D 23/00, F 23 D 14/12, F 23 D 17/00**

(54) **Grossformatiges Strahlungselement für Industrieöfen.**

(30) Priorität: **23.09.83 DD 255080**

(43) Veröffentlichungstag der Anmeldung:
**17.04.85 Patentblatt 85/16**

(45) Bekanntmachung des Hinweises auf die Patenterteilung:
**18.07.90 Patentblatt 90/29**

(84) Benannte Vertragsstaaten:
**AT BE DE FR GB IT LU**

(56) Entgegenhaltungen:
**DD-A- 144 950**
**DD-A- 145 190**
**DE-A-3 016 886**
**DE-B-1 255 125**
**DE-C-3 144 146**
**FR-A-2 181 197**
**LU-A- 55 438**

(73) Patentinhaber: **VEB Rohrkombinat Stahl- und Walzwerk Riesa**
**Dimitroffstrasse 10**
**DDR-8400 Riesa (DD)**

(72) Erfinder: **Scheidling, Gunter**
**Stauffenbergstrasse 12**
**DDR-9200 Freiberg (DD)**
Erfinder: **Scheidling, Matthias, Dipl.-Ing.**
**Schulweg 17 c**
**DDR-9200 Freiberg (DD)**
Erfinder: **Mieth, Peter**
**Alfred-Hecktheuer-Strasse 1**
**DDR-8400 Riesa (DD)**
Erfinder: **Bäger, Werner**
**Mühlweg 20**
**DDR-8400 Riesa (DD)**
Erfinder: **Borrmann, Frank, Dipl.-Ing.**
**Johann-Sebastian-Bach-Strasse 11**
**DDR-9200 Freiberg (DD)**

(74) Vertreter: **UEXKÜLL & STOLBERG**
**Patentanwälte**
**Beselerstrasse 4**
**D-2000 Hamburg 52 (DE)**

Courier Press, Leamington Spa, England.

**Beschreibung**

Die Erfindung betrifft ein großformatiges Strahlungselement für Industrieöfen mit einem großformatigen Industrieofenbauteil aus hitzebeständigem Stahlbeton.

In Industrieöfen und ähnlichen Wärmeaggregaten kommen in zunehmendem Maße scheitrechte Decken in Verbindung mit Strahlungsbrennern zur Anwendung. Der Grund dafür ist die besonders effektive Möglichkeit der Wärmeübertragung durch Strahlung. Bekannt sind Rippendeckenplatten mit Aussparungen für Strahlungsbrenner nach DD-PS 145 190 sowie Oberofenelemente aus bewehrtem Feuerbeton nach DD-PS 140 165. Es wurde weiterhin versucht, Fertigteile aus bewehrtem Feuerbeton für die Zustellung von Hängedecken und Wandelemente zu verwenden.

Die vorstehend genannten Ofenelemente und Wandelemente werden gegenwärtig mit Strahlungsbrennern nach DD-PS 144 950 oder DD-PS 69 659 komplettiert.

Die DE-A-I 255 125 zeigt eine Hängedecke für Industrieöfen, in welche Brennersteine eingesetzt sind, die Brennstoff-Luft-Mischeinrichtungen aufnehmen. Dabei sind die Brennersteine als Traganker der Hängedecke ausgebildet und müssen wegen der ihnen zugeordneten Doppelfunktion als Tragelemente sowie als eigentliche Brennersteine in besonderer Weise sowohl hochfest als auch feuerfest ausgebildet werden. Die Maßnahme stellen einen erheblichen Aufwand dar.

Diese in der Praxis verwendeten Lösungen bzw. Kombinationen von Ofenbauteilen und Strahlungsbrennern weisen in ihrer Gesamtheit folgende Nachteile auf:

1. Die erforderlichen großen Aussparungen für die Aufnahme der Strahlungsbrenner führen zu erheblichen Querschnittsminderungen und damit zu erhöhter Riß- und Bruchgefahr der Decken- und Wandsysteme.

2. Infolge der getrennten Bauweise von Decken- und Wandelementen einerseits sowie Brennersystemen mit eingehängten Brennersteinen andererseits, treten oft unter Betriebsbedingungen Lageveränderungen zwischen beiden Systemen auf, wodurch die Strahlungsbrenner ihre definitive Eigenschaft zur Bildung einer Flachflamme verlieren.

3. Durch den konstruktiv bedingten Ringspalt zwischen Decke und Brennermantel strömt heißes Abgas aus dem Ofeninnenraum, was eine thermische Überbeanspruchung der Stahlarmierung im Deckensystem, am Brennermantel, an der Tragkonstruktion des Ofens und nicht zuletzt eine Belastung der Umwelt und der damit verbundenen Energieverluste zur Folge hat.

4. Die Brennersteinhalterungen und -mäntel müssen aus hochlegierten Stahlmarken bestehen, da sie sonst während des Betriebes stark verzundern und wegbrennen.

5. Das relativ hohe Eigengewicht der Brenneranordnung, bedingt durch den montierten Brennerstein, erfordert beim Neubau oder bei Reparaturmaßnahmen entsprechende Hebezeuge.

6. Der Wechsel von kompletten Brennern bzw. von Verschleißteilen ist nur an außer Betrieb genommenen Industrieöfen oder anderen Wärmeaggregaten möglich.

7. Konstruktiver Aufbau und erforderliche Verwendung von hochlegierten Stählen führen zu hohem Fertigungsaufwand bisheriger Strahlungsbrenner.

Der Erfindung liegt die Aufgabe zugrunde, ein großformatiges Strahlungselement für Industrieöfen mit einem großformatigen Industrieofenbauteil aus hitzebeständigem Stahlbeton zu schaffen, das mit geringem Fertigungsaufwand herstellbar ist und bei einer erhöhten Lebensdauer verbesserte Gebrauchswerteigenschaften aufweist, wobei insbesondere der Ringspalt zwischen dem Brennerstein und der Öffnung im Decken- bzw. Wandelement beseitigt werden soll, um einen gleichmäßigen, einheitlichen und stufenlosen Übergang bei gleichzeitiger Reduzierung der Öffnungsgrößen in der Decken- bzw. Wandanordnung zu erhalten, ohne daß eine thermische Überbeanspruchung im Öffnungsbereich auftritt.

Erfindungsgemäß wird die Aufgabe dadurch gelöst, daß sich der hitzebeständige Stahlbeton des Industrieofenbauteils bis zur Duchtrittsöffnung erstreckt und deren Begrenzungsflächen bildet und daß in die die innere Kontur eines Brennersteins aufweisende Durchtrittsöffnung nur die Brennstoff-Luft-Mischeinrichtung eingesetzt ist.

Es ist im Sinne der Erfindung, daß die Durchtrittsöffnung in ihrem Bereich die Wandung des konzentrischen Luftzuführungsrohres der Brennstoff-Luft-Mischeinrichtung bildet.

Ausgestaltet ist die Erfindung, wenn in der Nähe der Bewehrung des Stahlbetons in die Durchtrittsöffnung einmündende Kanäle für Verbrennungsluft angeordnet sind.

Sinnvoll ist die Erfindung damit ausgebildet, daß an der Bewehrung des Stahlbetons Halterungen befestigt sind, die sich an der kalten Seite des Industrieofenbauteils aus diesem erstrecken.

Vorteilhaft ist es, wenn eine oder mehrere Öffnungen in einem großformatigen Industrieofenbauteil aus bewehrtem Feuerbeton in ihrer Form und Größe so ausgebildet sind, daß sie gleichermaßen sowohl Brennermund als auch Aufnahme einer Brennstoff-Luft-Mischeinrichtung darstellen. In Richtung des Ofenraumes ist dazu vorteilhaft in das großformatige Industrieofenbauteil aus bewehrtem Feuerbeton ein sich erweiternder Verbrennungskanal eingearbeitet, der stufen- und fugenlos in die sich anschließende Ofeninnenseite übergeht. Die Funktion des Brennersteines wird somit auf das großformatige Industrieofenbauteil übertragen, wodurch der sonst notwendige gesonderte Brennerstein mit Brennersteinmantel und entsprechenden Halterungen entfällt. Die Öffnung zur Aufnahme der Brennstoff-Luft-Mischeinrichtung ist wesentlich kleiner als eine Öffnung zur Aufnahme eines Brenners mit Brennerstein. Die Mischeinrichtung ist spaltfrei in die Öffnungen eingesetzt.

Durch die sich vorteilhaft parabelförmig, treppenartig oder auch trichterförmig erweiternde Öffnung bei stufenlosem Übergang zum Industrieofenbauteil werden ofeninnenseitig wirkende Kerbspannungen an der Öffnung stark herabgesetzt. Der direkte Einbau der Brennstoff-Luft-Mischeinrichtung in das großformatige Industrieofenbauteil gestattet eine rekuperative Luftvorwärmung bei gleichzeitiger Kühlung der Innenseite der Öffnung, wodurch die thermische Belastung der Stahlbewehrung herabgesetzt wird. Der Vorzug der rekuperativen Luftvorwärmung bei gleichzeitiger Kühlung im Bereich der Stahlbewehrung läßt sich noch erhöhen, wenn die erforderliche Verbrennungsluft durch eine entsprechende Rohranordnung innerhalb des Industrieofenbauteiles zugeführt wird.

Die Möglichkeit des vorteilhaften Einbaues einer Öllanze und einer Zünd- oder Überwachungseinrichtung in die Brennstoff-Luft-Mischeinrichtung bleibt dabei in vollem Umfang erhalten.

Durch die Übernahme der Funktion des Brennersteines als auch der Funktion der Aufnahme der Brennstoff-Luft-Mischeinrichtung bildet das Industrieofenbauteil somit vorteilhaft ein großformatiges Industrieofenstrahlungselement.

Die Erfindung soll anhand von Ausführungsbeispielen näher erläutert werden.

In der zugehörigen Zeichnung zeigen:

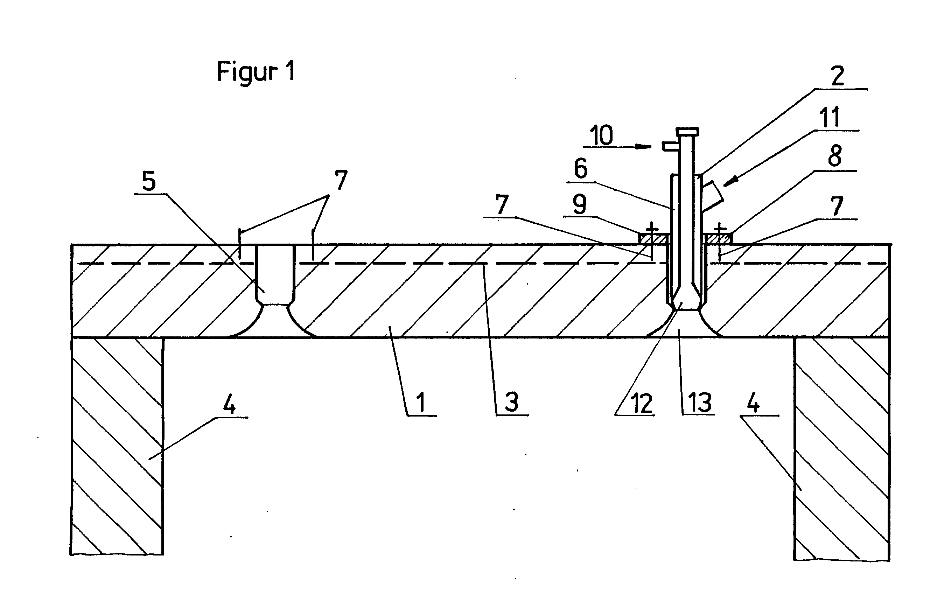

Figur 1 eine Grundausführung eines großformatigen Strahlungselementes nach Beispiel 1;

Figur 2 ein Strahlungselement mit Brennstoff-Luft-Mischeinrichtung ohne eingestecktes Luftzuführungsrohr nach Beispiel 2;

Figur 3 ein Strahlungselement mit getrennter Gas- und Luftzuführung nach Beispiel 3.

### Beispiel 1

Beispiel 1 zeigt eine Grundausführung eines großformatigen Strahlungselementes.

Ein großformatiges Strahlungselement wird von einem großformatigen Industrieofenbauteil 1 und einer zugehörigen Brennstoff-Luft-Mischeinrichtung 2 gebildet.

Das großformatige Industrieofenbauteil 1 besteht aus Feuerbeton mit Bewehrung 3 und ist mit Öffnungen 5 zur Aufnahme jeweils eines Teiles der Brennstoff-Luft-Mischeinrichtung 2 auf der dem Ofeninnenraum 4 abgewandten Seite versehen. Die Öffnungen 5 reichen bis in eine entsprechende Tiefe des Industrieofenbauteiles 1 hinein. Die Form und Größe dieser Öffnungen 5 korrespondieren weitgehend mit der Form und Größe des entsprechenden Luftzuführungsrohres 6 einschließlich seiner Austrittsöffnung. Von dieser Stelle an ist in das großformatige Industrieofenbauteil 1 der sich trichterförmig, treppenartig oder parabelförmig erweiternde Verbrennungskanal 13 eingearbeitet, der nach der Erfindung stufenlos zur Feuerraumseite des Strahlungselementes übergeht.

Die Brennstoff-Luft-Mischeinrichtung 2 wird als äußere Begrenzung vom Luftzuführungsrohr 6 gebildet, in das auf der dem Industrieofen abgewandten Seite ein Luftanschlußflansch seitlich einmündet. Im Luftzuführungsrohr 6 ist koaxial ein Gaszuführungsrohr und im Gaszuführungsrohr eine Öllanze oder eine Zünd- und Überwachungseinrichtung angeordnet. Das Gaszuführungsrohr wird feuerraumseitig von einem auswechselbaren Düsenblech abgeschlossen, durch das die Öllanze oder die Zünd- und Überwachungseinrichtung hindurchreicht. Außerdem ist das Gaszuführungsrohr in Richtung Ofeninnenraum axial verschiebbar in einen Mischkopf 12 mit Luftverdrallungsschlitzen eingesteckt. Der Mischkopf 12 wird vom Luftzuführungsrohr 6 fest umschlossen und weist die Austrittsöffnung für das Brennstoff-Luft-Gemisch auf.

Die gesamte Brennstoff-Luft-Mischeinrichtung 2 ist einfach mit dem entsprechenden Teil ihres Luftzuführungsrohres 6 spaltfrei in die Öffnung 5 des großformatigen Industrieofenbauteiles 1 eingesetzt. Dabei entfallen der Brennerstein, der Brennersteinmantel und Brennersteinhalterungen. Beim Bau eines Industrieofens oder eines anderen Wärmeaggregates werden an den entsprechenden Stellen erfindungsgemäße großformatige Strahlungselemente eingebaut. Über das Gaszuführungsrohr oder die Öllanze wird Brennstoff 10 und durch das Luftzuführungsrohr 6 die Verbrennungsluft 11 über die Verdrallungsschlitze dem Mischkopf 12 zugeführt. Der Brennstoff 10 wird mit der Verbrennungsluft 11 im Mischkopf 12 innig vermischt, und das Gemisch wird in bekannter Weise verdrallt. Die sich im Verbrennungskanal 13 bildende Flamme folgt der Wandung des Verbrennungskanals 13 mit entsprechender Kontur und bildet im Ofeninnenraum eine scheibenartige Flachflamme.

Je nach der durch den Industrieofen, durch den Einbauort oder durch den technologischen prozeß erforderlichen Brennerleistung ist das Gaszuführungsrohr mit entsprechend ausgebildetem Gasdüsenblech unterschiedlich tief in den Mischkopf 12 eingesteckt.

### Beispiel 2

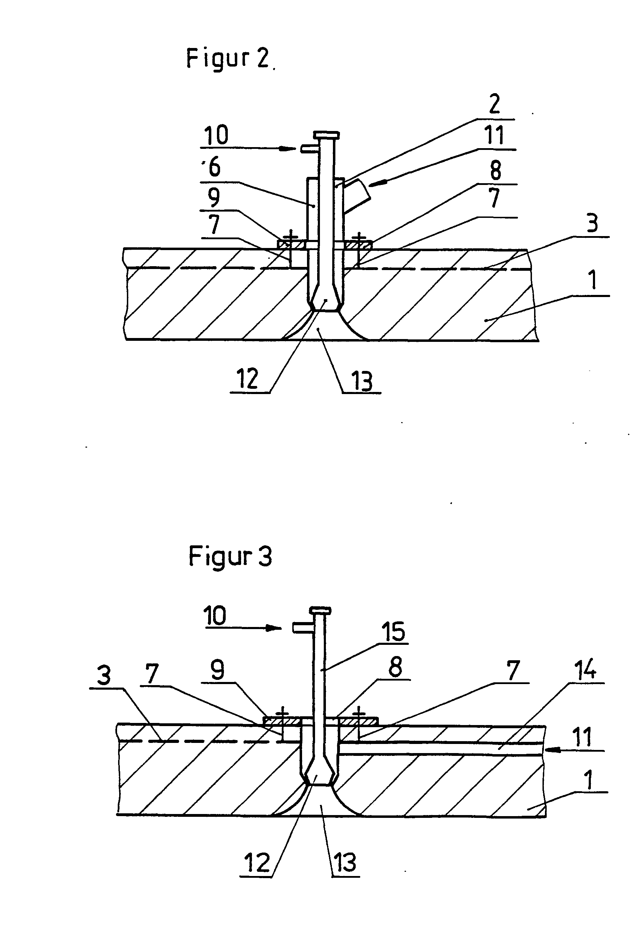

Die Ausführung nach Figur 2 zeigt, daß die Öffnung 5 im großformatigen Industrieofenbauteil 1 bis zum Beginn des Verbrennungskanales 13 das Luftzuführungsrohr 6 ersetzt. Das Luftzuführungsrohr 6 aus Stahl endet über der Oberfläche des großformatigen Industrieofenbauteiles 1 in einem Flansch 8. Mittels des Flansches 8, eines Dichtungsringes 9 und auf der Bewehrung 3 verankerter Halterungen 7 wird das Luftzuführungsrohr 6 mit dem großformatigen Industrieofenbauteil 1 verbunden. Das Luftzuführungsrohr 6 und die Öllanze bzw. Zünd- und Überwachungseinrichtung ragen in die Öffnung 5 hinein, und der Mischkopf 12 ist unmittelbar vor dem Verbrennungskanal 13 angeordnet.

Die Funktion dieser Ausführung stimmt mit der Funktion der Grundausführung gemäß Beispiel 1 überein. Durch den Ersatz eines Teiles des Luftzuführungsrohres 6 unmittelbar durch die Wandung der Öffnung 5 werden durch den direkten Kontakt der Verbrennungsluft mit der Wandung der Öffnung 5 die Luftvorwärmung erhöht, der energetische Wirkungsgrad verbessert sowie die Fertigung und das Gewicht weiter vermindert.

Beispiel 3

Die Ausführung nach Fig. 3 ist für die Anwendungsfälle vorgesehen, bei denen eine maximale Luftvorwärmung, verbunden mit dem gleichzeitigen Kühlen des Strahlungselementes, erreicht werden soll.

Diese Ausführung ist dadurch gekennzeichnet, daß das im Beispiel 2 verwendete Luftzuführungsrohr 6, das bis auf die Oberseite des großformatigen Industrieofenbauteiles 1 reicht und die Öffnung 5 verschließt, entfällt. Die entstehende Öffnung 5 wird mit einem Flansch 8, einem Dichtungsring 9 und auf der Bewehrung 3 angebrachten Halterungen 7 verschlossen. Die Verbrennungsluft wird dafür über im Feuerbeton angeordnete Kanäle 14 tangential bzw. radial dem Mischkopf 12 zugeführt. Dabei können Teile der Luftzuführung die Bewehrung 3 des Strahlungselementes teilweise oder ganz ersetzen.

Die Funktion dieser Ausführung stimmt mit der Funktion der Grundausführung gemäß Beispiel 1 überein. Durch die Verlegung der Luftzuführung in das Strahlungselement selbst wird die Möglichkeit einer maximalen Luftvorwärmung und somit einer weiteren Verbesserung der brenntechnischen Kennwerte erreicht.

## Patentansprüche

1. Großformatiges Strahlungselement für Industrieöfen mit einem großformatigen Industrieofenbauteil (1) aus hitzebeständigem Stahlbeton sowie mit mindestens einer Brennstoff-Luft-Mischeinrichtung (2) eines Strahlungsbrenners, wobei für die Brennstoff-Luft-Mischeinrichtung (2) eine Durchtrittsöffnung (5) im Industrieofenbauteil (1) vorgesehen ist, dadurch gekennzeichnet, daß sich der hitzebeständige Stahlbeton des Industrieofenbauteils (1) bis zur Durchtrittsöffnung (5) erstreckt und deren Begrenzungsflächen bildet und daß in die die innere Kontur eines Brennersteins aufweisende Durchtrittsöffnung (5) nur die Brennstoff-Luft-Mischeinrichtung (2) eingesetzt ist.

2. Strahlungselement nach Anspruch 1, dadurch gekennzeichnet, daß die Durchtrittsöffnung (5) in ihrem Bereich die Wandung des konzentrischen Luftzuführungsrohres (6) der Brennstoff-Luft-Mischeinrichtung (2) bildet.

3. Strahlungselement nach Anspruch 1 oder 2, gekennzeichnet durch in der Nähe der Bewehrung (3) des Stahlbetons in die Durchtrittsöffnung (5) einmündende Kanäle (14) für Verbrennungsluft (11).

4. Strahlungselement nach einem der Ansprüche 1 bis 3, dadurch gekennzeichnet, daß an der Bewehrung (3) des Stahlbetons Halterungen (7) befestigt sind, die sich an der kalten Seite des Industrieofenbauteils (1) aus diesem erstrecken.

## Revendications

1. Elément radiant de grandes dimensions destiné à des fours industriels comportant un composant de grandes dimensions pour four industriel (1) en béton armé réfractaire et au moins un dispositif de mélange carburant-air (2) d'un brûleur radiant, le composant (1) de four industriel comportant une ouverture de pénétration (5) pour le dispositif de mélange carburant-air (2), caractérisé en ce que le béton armé réfractaire du composant (1) de four industriel s'étend jusqu'à l'orifice de pénétration (5) et constitue des surfaces de limite de ce dernier, et en ce que seul le dispositif de mélange carburant-air (2) est introduit dans l'orifice de pénétration (5) qui présente le contour intérieur d'un bloc de brûleur.

2. Elément radiant selon la revendication 1, caractérisé en ce que l'orifice de pénétration (5) constitue dans sa zone la paroi du tube concentrique d'amenée d'air (6) du dispositif de mélange carburantair (2).

3. Elément radiant selon la revendication 1 ou 2, caractérisé par des canaux (14) destinés à l'air de combustion (11) qui débouchent dans l'ouverture de pénétration (5) au voisinage de l'armature (3) du béton armé.

4. Elément radiant selon l'une des revendications 1 à 3, caractérisé en ce que des supports (7), qui s'étendent sur le côté froid du composant de four industriel (1) à partir de celui-ci, sont fixés à l'armature (3) du béton armé.

## Claims

1. Large-sized radiation unit for industrial furnaces with a large-sized industrial furnace component (1) of heatproof reinforced concrete and with at least one fuel-air mixing device (2) of a radiant burner, a through-opening (5) being provided in the industrial furnace component (1) for the fuel-air mixing device (2), characterised in that the heatproof reinforced concrete of the industrial furnace component (1) extends up to the through-opening (5) and forms the latter's boundary surfaces, and that only the fuel-air mixing device (2) is inserted in the through opening (5), which has the internal contour of a burner firing block.

2. Radiation unit according to claim 1, characterised in that the area of the through-opening (5) forms the wall of the concentric air supply pipe (6) of the fuel-air mixing device (2).

3. Radiation unit according to claim 1 or 2, characterised by ducts (14), which lead into the through-opening (5) in the vicinity of the reinforcement (3) of the reinforced concrete, for combustion air (11).

4. Radiation unit according to one of claims 1 to 3, characterised in that holders (7) are secured to the reinforcement (3) of the reinforced concrete and extend out of the industrial furnace component (1) on the cold side of the latter.

Figur 1

EP 0 137 362 B1

Figur 2.

Figur 3